# EUROPEAN PATENT SPECIFICATION

(11) **EP 1 473 489 B1**
(45) Date of publication and mention of the grant of the patent: **09.08.2006**
(21) Application number: 04009603.4
(22) Date of filing: 22.04.2004
(51) Int. Cl.: F16H 48/08, F16H 55/08

(54) **Differential gearing for vehicle including planetary gear mechanism and method of manufacturing same**
Apparatus und Herstellungsverfahren eines Differentialgetriebes für Fahrzeuge mit einem Planetengetriebe
Dispositif et procédé de fabrication d'une transmission différentielle contenant une transmission planétaire

(30) Priority: 23.04.2003 JP 2003118819
(43) Date of publication of application: 03.11.2004
(73) Proprietor: TOYODA KOKI KABUSHIKI KAISHA, Kariya-shi, Aichi-ken (JP)
(72) Inventor: Yoshiyama, Takahiro, Sayama-shi Saitama 350-1331 (JP); Hasegawa, Yasunari, Sayama-shi Saitama 350-1331 (JP)
(74) Representative: HOFFMANN EITLE

(56) References cited:
- EP-A- 0 731 181
- EP-A- 0 838 308
- DE-A- 4 013 202
- DE-A- 10 237 279
- US-A- 5 310 389
- PATENT ABSTRACTS OF JAPAN vol. 2003, no. 06, 3 June 2003 (2003-06-03) & JP 2003 056672 A (BOSCH AUTOMOTIVE SYSTEMS CORP), 26 February 2003 (2003-02-26)
- PATENT ABSTRACTS OF JAPAN vol. 1996, no. 11, 29 November 1996 (1996-11-29) & JP 8 178017 A (TOCHIGI FUJI IND CO LTD), 12 July 1996 (1996-07-12)

## Description

The present invention relates to a differential gearing for vehicle, and in particular, to a differential gearing for vehicle including a planetary gear mechanism to a planet gear for the planetary gear mechanism and to a method of manufacturing a tooth crest of the planet gear. The preambles of claims 1 and 2 are based upon JP-A-2003056672.

A differential gearing for vehicle including a planetary gear mechanism comprises an internal gear having internal teeth formed around an inner periphery surface thereof, a sun gear disposed on a circle located inside of and concentric with the internal gear, a plurality of planet gears disposed between the internal gear and the sun gear in meshing engagement with the both gears, and a planetary carrier for carrying the planet gears for rotation about the axis of rotation of the internal gear and the sun gear while permitting the planet gears to rotate about their own axes. The planetary carrier may be connected to a shaft which transmits a drive from an engine, for example, while the internal gear and the sun gear may be connected to front and rear wheels, respectively, of a four wheel driven vehicle.

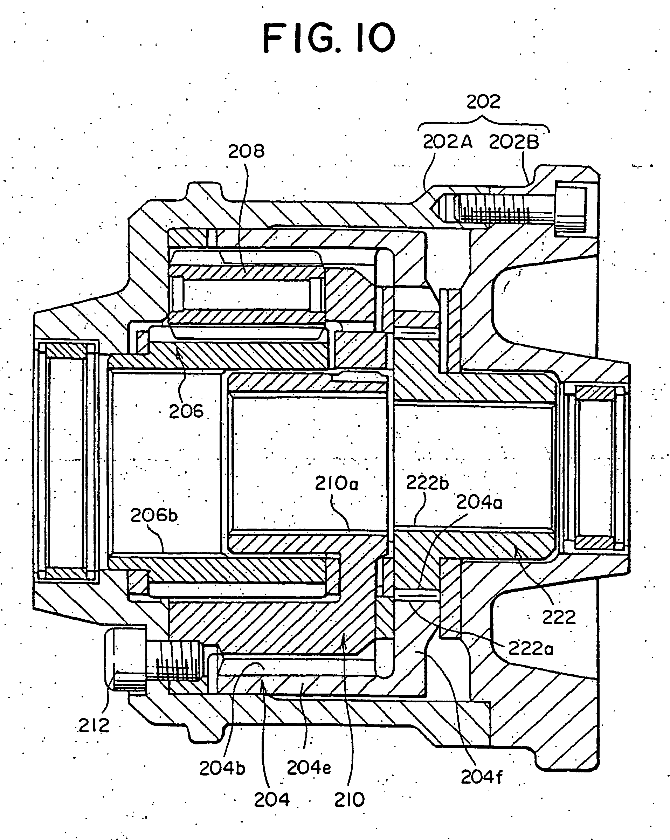

Fig. 10 shows an exemplary differential gearing for vehicle as mentioned above (refer JP-A- 2003-056, 672), and the construction of a conventional differential gearing for vehicle of planetary gear type will be briefly described below with reference to Fig. 10. Rotatably disposed within a housing 202 which comprises a first housing 202A and a second housing 202B is an internal gear 204, and a sun gear 206 is disposed on a circle located inside of and concentric with the internal gear 204. A plurality of planet gears 208 which are carried by a planetary carrier 210 are disposed between the internal gear 204 and the sun gear 206 in meshing engagement with the both gers 204 and 206. The planetary carrier 210 is secured to the housing 202 by a bolt 212 for integral rotation therewith. In the arrangement of the present invention, the internal gear 204, the sun gear 206 and the planet gears 208 each have helical gear teeth which are in meshing engagement with each other.

The internal gear 204 has a cylindrical portion 204e and a flange 204f which extends radially inward from one end (right end as viewed in Fig. 10) of the cylindrical portion 204e. Internal gear teeth 204b are formed in the internal peripheral surface of the cylindrical portion 204e while spline grooves 204a are formed in the internal peripheral surface of the flange 204f. Spline grooves 222a which are formed around the outer periphery of a coupling 222 are in fitting engagement with the spline grooves 204a in the flange 204f.

In the differential gearing for vehicle constructed in the manner mentioned above, spline grooves 210a formed around the inner periphery of the planetary carrier 210 are engaged by spline grooves formed around a shaft, not shown, which transmits a drive from an engine, and spline grooves 222b formed around the inner periphery of the coupling 222 which is splined to the internal gear 204 are connected to either one of the front and rear wheels of a four wheel driven vehicle while spline grooves 206b formed around the inner periphery of the sun gear 206 are connected to the other of the front and rear wheels.

When a drive from an engine is transmitted, the differential gearing for vehicle operates such that the planetary carrier 210 which carries the planet gears 208 is driven for rotation. If the vehicle is running straightforward on a good road surface, the planet gears 208 carried by the planetary carrier 210 as well as the internal gear 204 and the sun gear 206 which mesh with the planet gears 208 rotate in an integral manner without a relative rotation between them. As when cornering, the planet gears 208 which are carried by the planetary carrier 210 rotate about their own axes, thereby correcting for differential rotations of the front and rear wheels which are connected to the internal gear 204 and the sun gear 206, respectively. When the coefficients of friction which the front and rear wheels experience from the road surface are different to produce a difference in the grip of the front and the rear drive wheel, an axial thrust which results from reactions of the meshing helical gear teeth as they rotate and a frictional force developed at the abutting surfaces to the planetary carrier 210 and the planet gears 208 are effective to provide a torque distribution or a limitation of the differential action.

In a differential gear of a planetary gear type, a differential action limiting force accrues from frictional resistance presented by a sliding motion between a planetary carrier and planet gears, and accordingly, there are problems that if a lubricant oil is not supplied to the sliding surfaces of these members in a sufficient amount, a seizure may occur or an abrasion of sliding surfaces of the planetary carrier and planetary gears may occur. There is also a likelihood that a noise vibration may be generated.

To accommodate for this, a variety of constructions for supplying a lubricant oil to sliding parts between a gear in the differential gearing which transmits a torque and a receiving opening in which the gear is received (refer JP-A-8178017) have been proposed. In the construction disclosed in the cited Application, the tooth crest of each gear portion of a pinion gear is formed with a meshwork of oil groove by a knurling operation.

In conventional differential gearings for vehicle as described above, the meshwork of oil groove which is formed in the tooth crest of the gear extends continuously from end to end of the tooth crest (from one end face or side surface of the tooth to the other end face or side surface). Accordingly, while it is a simple matter to supply the lubricant oil into the oil groove, the lubricant oil cannot be maintained in the oil groove, but readily finds its way out, resulting in a failure to provide a satisfactory improvement in the lubricating effect. As a consequence of this, there are likelihoods of a seizure or a noise vibration.

### OBJECT AND SUMMARY OF THE INVENTION

Accordingly, it is an object of the present invention to provide a differential gearing for vehicle including a planetary gear mechanism which is capable of improving the lubricating effect of a sliding surface at the tooth crest of a planet gear and improving a seizure resistance while reducing the occurrence of a noise vibration during a sliding motion.

Above object is accomplished by constructing a differential gearing for vehicle with a planetary gear mechanism comprising an internal gear, a sun gear disposed on a circle which is concentric with the internal gear, planet gears disposed between the internal gear and the sun gear in meshing engagement with the both gears, and a carrier which is disposed in sliding contact with the tooth crest of the planet gears and carrying the planet gears so as to be capable of rotating about the axis of rotation of the sun gear and about their own axes, and by forming the tooth crest of the planet gear in a configuration having a number of recesses which remain to be irregular.

The above object is also accomplished by forming the tooth crest of the plane gear into a configuration having discontinuous recesses.

In the differential gearing for vehicle including a planetary gear mechanism according to the present invention, it is possible to maintain a lubricant oil which is supplied into the recesses of the tooth crest in a reliable manner, thus improving the lubricating effect, the abrasion resistance of sliding parts between the planet gears and the carrier, and the seizure resistance. In addition, the occurrence of a noise vibration can be reduced.

The above object is also accomplished in a differential gearing for vehicle including a planetary gear mechanism which comprises an internal gear, a sun gear disposed on a circle which is concentric with the internal gear, planet gears disposed between the internal gear and the sun gear in meshing engagement with the both gears, and a carrier disposed in sliding contact with the tooth crest of the planet gears and carrying the planet gears so as to be capable of rotation about the axis of rotation of the sun gear and about their own axes, by forming a chamfered portion between the tooth crest of the planet gear and the side surface of the tooth.

The above object is also accomplished by forming an edge between the tooth crest and the side surface of the planet gear with a radius of curvature.

The above object is also accomplished by forming an edge between the tooth crest of the planet gear and the chamfered portion with a radius of curvature.

In accordance with the present invention, by forming a chamfered portion, or by forming an edge with a radius of curvature or by using such techniques in combination, the introduction of a lubricant oil onto the tooth crest is facilitated, thus improving the abrasion resistance of sliding parts between the planet gears and the carrier, and the seizure resistance. In addition, noises and vibrations which occur during the sliding motion can be reduced.

A differential gearing for vehicle including a planetary gear mechanism which is capable of accomplishing the object can be manufactured by a method described below.

Specifically, after the crest surface of the planet gear is shaped, surface finish is applied to the tooth crest of the planet gear, and the finished surface is left to be shallow as compared with the depth of recesses formed in the tooth crest to leave the recesses in the tooth crest, whereby a tooth crest as defined in Claim 1 or 2 can be obtained.

When the manufacturing method of the present invention is used, a finishing operation is applied only to the very surface to provide a smooth surface, and accordingly, the lubricant oil can be kept in place to enable a smooth sliding motion.

### BRIEF DESCRIPTION OF THE DRAWINGS

Fig. 1 is a cross section of a differential gearing for vehicle including a planetary gear mechanism according to one embodiment of the inventions, taken along the axis of rotation thereof;
Fig. 2 is a cross section of a plane which is taken in a direction perpendicular to the axis of the differential gearing for vehicle;
Fig. 3 is a plan view showing a planet gear used in the differential gearing for vehicle;
Fig. 4 is a side elevation of the planet gear;
Fig. 5 is a cross section of a differential gearing for vehicle according to a second embodiment, taken along the axis of rotation thereof;
Fig. 6 is a cross section of the differential gearing for vehicle by a plane which is perpendicular to the axis of differential gearing for vehicle;
Fig. 7 is a cross section showing an essential part of a planet gear of a differential gearing for vehicle according to a third embodiment;
Fig. 8 is a cross section showing an essential part of a planet gear of a differential gearing for vehicle according to a fourth embodiment;
Fig. 9 is a cross section showing an essential part of a planet gear of a differential gearing for vehicle according to a fifth embodiment; and
Fig. 10 is a cross section of a conventional differential gearing for vehicle, taken along the axis of rotation thereof.

### DETAILED DESCRIPTION OF THE PREFERRED EMBODIMENTS

Several embodiments of the present invention will now be described with reference to the drawings. A differential gearing for vehicle contains within a substantially cylindrical housing 2 a planetary gear mechanism which comprises an internal gear 4, a sun gear 6, a plurality of planet gears 8 and a planetary carrier 10 which carries the planet gears 8.

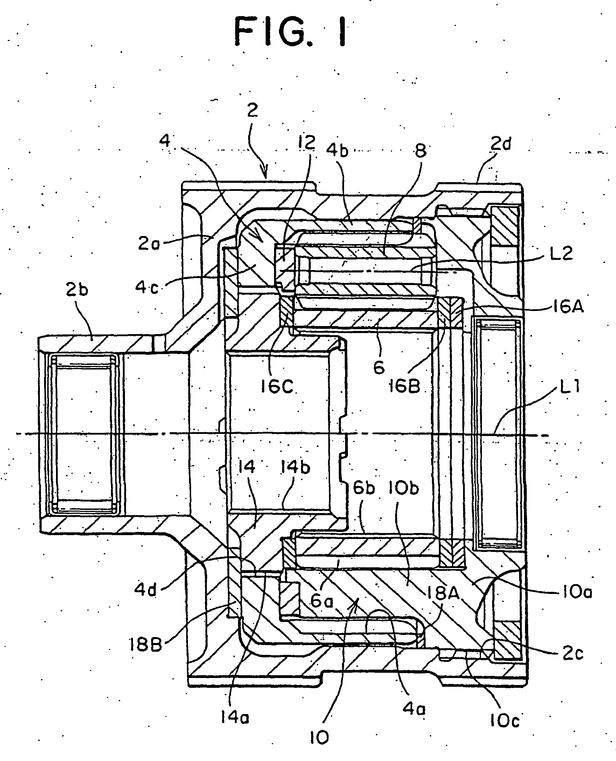

On one hand (left-hand side as viewed in Fig. 1) of the cylinder, the housing 2 has a bottom 2a and an externally projecting cylindrical portion 2b of a reduced diameter, and an internal gear 4 having internal teeth 4a formed around its internal peripheral surface is rotatabaly contained within the housing 2 toward the bottom 2a. A sun gear 6 which rotates about the same axis as the axis L1 of rotation of the internal gear 4 is disposed within the internal gear 4. The sun gear 6 represents an external gear which is formed with teeth 6a around the external peripheral surface. A plurality of planet gears 8 which are carried by a planetary carrier 10 are disposed between the internal gear 4 and the sun gear 6 in meshing engagement with the both gears 4 and 6.

The planetary carrier 10 rotates about the axis of rotation A1 of the internal gear 4 and the sun gear 6. Each planet gear 8 which is carried by the planetary carrier 10 is arranged such that its center axis L2 is capable of rotating about the axis of rotation L1 of the planetary carrier 10 and the planet gear is also capable of rotating about the axis L2 within the space in the planetary carrier 10 in which it is received. In the arrangement of the present invention, the internal gear 4, the sun gear 6 and the planet gears 8 each have helical gear teeth, and each planet gear 8 is in meshing engagement with the internal gear 4 which is located on the outside and with the sun gear 6 which is located on the inside.

The planetary carrier 10 has an annular bottom 10a and a plurality of stanchions 10b which are mounted on the bottom 10a at a given spacing and at right angle to the bottom 10a. A planet gear carrying space is formed between two adjacent stanchions 10b, and each planet gear 8 is received in and carried within the planet gear carrying space. The planetary carrier 10 is inserted into the housing 20 with the opposite end (open end) from the bottom 10a of the stanchion 10b directed toward the bottom 2a of the housing 2 while the planet gears 8 are inserted into the carrying spaces between the stanchions 10b. Splines 10c are formed around the outer periphery of the bottom 10a, and are engaged with splines 2c which are formed in the internal surface of the opening of the housing 2, thus rotationally coupling the planetary carrier 10 and the housing 2 together.

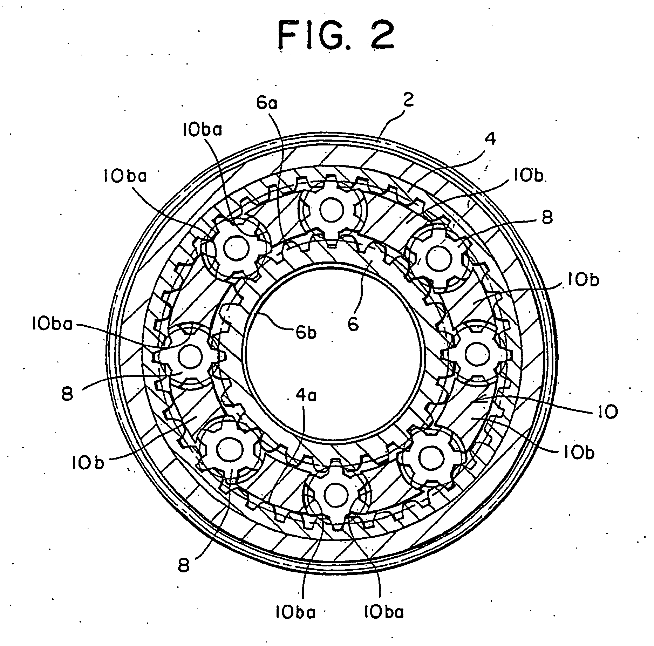

Each stanchion 10b of the planetary carrier 10 has opposite sidewalls 10ba (see Fig. 2) which carry the planet gear 8 and which are arcuate with a diameter which substantially matches the diameter of the addendum circle of the planet gear 8. When the planet gear 8 rotates about its own axis, the tooth crest of the planet gear 8 slides against the sidewalls 10ba of the stanchions 10b.

The internal gear 4 has a cylindrical portion 4b and a flange 4c which extends radially inward from one end (left end as viewed in Fig. 1) of the cylindrical portion 4b. Internal gear teeth 4a are formed around the inner peripheral surface of the cylindrical portion 4b while spline grooves 4d are formed around the inner peripheral surface of the flange 4c. The spline grooves 4d in the flange 4c are in fitting engagement with spline grooves 14a formed around the outer periphery of a coupling 14.

Washers 16A, 16B and 16C are disposed between one axial end (right end face as viewed in Fig. 1) of the sun gear 6 and the bottom 10a of the planetary carrier 10 and between the other end face of the sun gear 6 and the coupling 14 which is coupled to the internal gear 4 for resisting thrusts which may be developed during a relative rotation with respect to the planet gears 8. Similarly, washers 18A and 18B are disposed between one axial end face (right end face as viewed in Fig. 1) of the internal gear 4 and the bottom 10a of the planetary carrier 10 and between the other end face of the internal gear 4 and the bottom 2a of the housing 2 for resisting thrusts which may be developed during a relative rotation with respect to the planet gears 8.

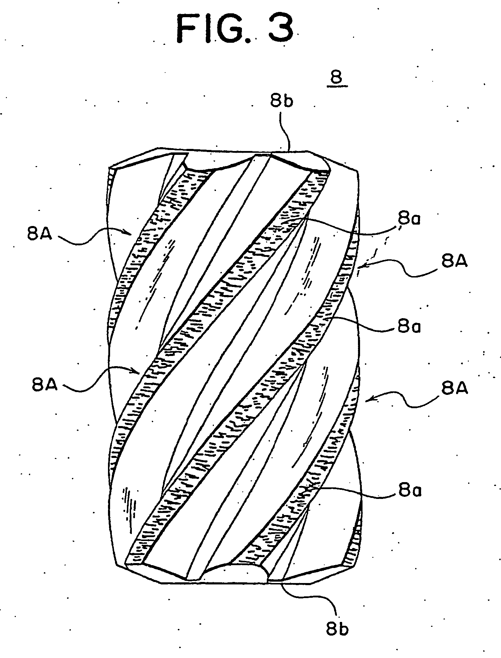

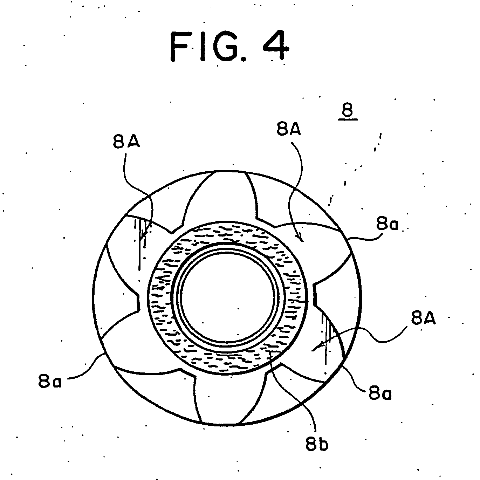

The planet gear 8 has helical gear teeth 8A as mentioned previously (see Figs. 3 and 4), and each gear tooth 8A has a tooth crest 8a which is pitted or pockmarked. In other words, a number of fine recesses are formed over the entire tooth crest 8a in an irregular condition or non-uniform random condition. Such a configuration of the tooth crest 8a can be obtained by applying a shot-peening operation after the planet gear 8 has been shaped or the surface of the gear which is obtained by a cutting operation to shape it may be directly used. In a conventional gear, a finishing operation is applied to the surface of the gear after it has been shaped in order to smooth it.

After forming the tooth crest 8a as by a hobbing operation to achieve a configuration including irregular recesses, a finishing operation (such as a lapping operation) is applied to the very surface of the tooth crest 8a to make it smooth. In this instance, because the finishing operation is applied through a very slight thickness of the surface, recesses which are located in the tooth crest 8a remain intact. In addition, the tooth crest 8a of each tooth 8A of the planet gear 8 may be subject to a coating operation.

It will be seen that the planet gear 8 is disposed opposite to the bottom surface of the planet gear carrying space in the planet carrier 10 at its one end (right end as viewed in Fig. 1) and is disposed opposite to a washer 12 interposed between the planet gear and the flange 4c of the internal gear 4 at the other end, and accordingly, when it is subject to a thrust as a result of meshing engagement with the internal gear 4 and the sun gear 6, it is urged against the planetary carrier 10 or the washer 12. Accordingly, the opposite end faces 8b of the planet gear 8 may also be formed with a number of recesses in an irregular condition in the similar manner as the tooth crest 8a.

In use, the differential gearing for vehicle constructed in the manner mentioned above may be arranged such that the planetary carrier 10 transmits a drive from an engine to the outer periphery 2d of the housing 2 which is splined thereto, and one of the front and rear wheels of a four wheel driven vehicle may be connected to the spline grooves 14b which are formed around the inner periphery of the coupling 14 which is splined to the internal gear 4 while the other of the front and rear wheels may be connected to the spline grooves 6b which are formed around the inner periphery of the sun gear 6.

The operation of the differential gearing for vehicle including the planetary gear mechanism constructed in the manner mentioned above will now be described assuming that the housing 2, the internal gear 4 and the sun gear 6 are connected to the engine and the front and the rear wheel of the four wheel driven vehicle as an example. When the vehicle is running straightforward on a normal flat road, the front and the rear driving wheel are rotating in the identical manner and accordingly, the internal gear 4, the planet gears 8 and the sun gear 6 remain in meshing engagement without a relative rotation therebetween, and the entire differential gearing rotates about the axis of rotation L1 in an integral manner.

When there is a differential rotation between the front and the rear wheel as when cornering, the differential rotation is corrected for by the planet gears 8 carried by the planetary carrier 10 which rotate about the axis of rotation L1 while rotating also about the center axis L2. Thus, the differential function is achieved by the rotation of the planet gears 8 about their own axes in a direction to accelerate one and decelerate the other of the internal gear 4 and the sun gear 6 which are connected to the front and the rear wheel, respectively.

When there occurs a difference in the grip of the front and rear wheel as when the four wheel driven vehicle is running on a bad road, for example, the differential gearing provides a torque distribution. Specifically, frictional forces which result from the meshing engagement between the gears 4, 6 and 8 are effective to reduce the rotating force of the driving wheel which is idling, and an amount of torque which corresponds to the reduction is directly transmitted to the driving wheel which has a higher traction, thus providing a torque distribution or the differential action limiting function. More specifically, if one of the driving wheels slips, the planet gears 8 which mesh with the internal gear 4 and the sun gear 6 rotate about their own axes. Since the internal gear 4, the sun gear 6 and the planet gears 8 have helical gear teeth, it follows that upon occurrence of a relative rotation therebetween, reactions to the mutual rotation produce an axial thrust, and a frictional force is developed at the abutting surfaces of the planetary carrier 10 and the planet gears 8. This frictional force provides a differential action limiting force. It is to be noted that the internal gear 4 and the sun gear 6 are axially movable, and the thrust is resisted by the washers 16A, 16B and 18A disposed between the planet gears and the planetary carrier 8 and the washers 16C and 18B disposed between the coupling 14 and the housing 2, and the resulting frictional force provides a differential action limiting force.

As mentioned above, the differential gearing of this embodiment is arranged to provide a differential action limiting function by a frictional force which is developed as the tooth crest 8a of the planet gear 8 slides against the planet gear carrying space of the planetary carrier 10 (or side surfaces 10ba of the stanchions 10b disposed on the opposite sides). However, because the tooth crest 8a of the planet gear 8 is formed with a number of fine recesses in an irregular condition, it is possible to keep the lubricant oil which is introduced into the tooth crest 8a in a satisfactory manner. In particular, because the recesses are not in the form of continuous grooves, but are in the form of individual independent pockets, the lubricant oil can be maintained in a reliable manner. As a consequence, the lubricating effect is improved, allowing the seizure resistance to be improved. This also prevents a degradation which results from the sliding motion between the side surfaces 10ba of the stanchions 10b on the planetary carrier 10 and the tooth crest 8a of the planet gear 8, and also reduces a noise vibration. In addition, since the surface area of the tooth crest is increased, adherence of a coated material can be improved when a coating is applied.

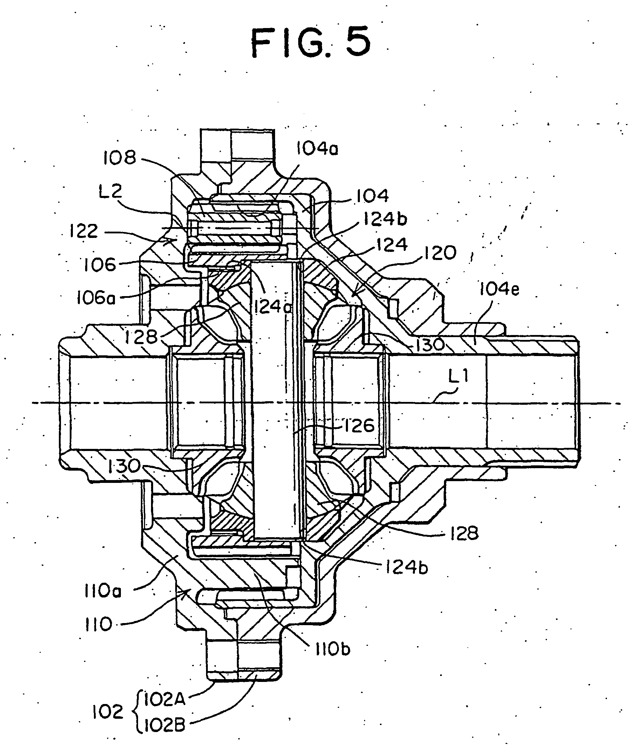

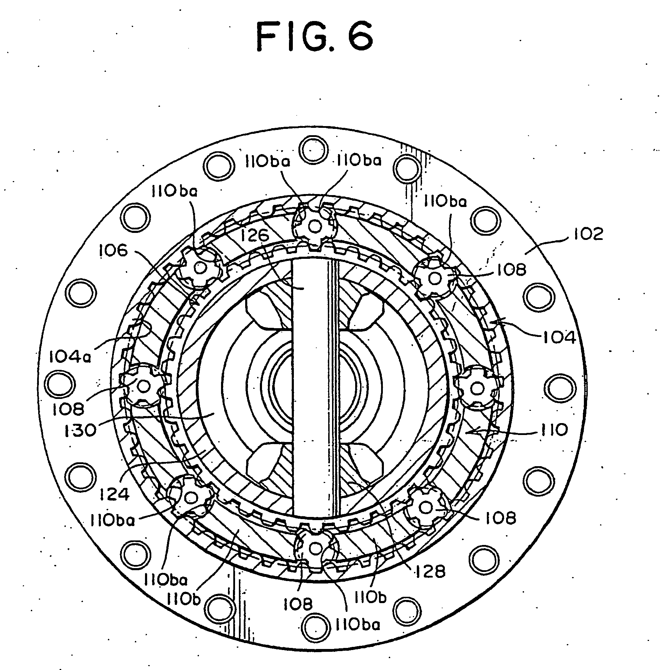

Figs. 5 and 6 show a differential gearing including a planetary gear mechanism according to a second embodiment. Specifically, Fig. 5 is a cross section taken along the axis of rotation L1 and Fig. 6 is a cross section taken along a plane which is perpendicular to the axis L1. The differential gearing of this embodiment comprises an integral construction of a bevel gear type front differential unit 120 and a planetary gear type center differential unit 122. The bevel gear type front differential unit 120 and the planetary gear type center differential unit 122 are integrally assembled into a housing 102 which comprises a first housing 122A and a second housing 122B disposed in abutting relationship.

An internal gear 104 which has internal gear teeth 104a formed around its inner periphery surface is rotatably fitted within the housing 102. A sun gear 106 which rotates about the same axis as the axis of rotation L1 of the internal gear 104 is disposed inside of the internal gear 104. A plurality of planet gears 108 carried by a planetary carrier 110 are disposed between the internal gear 104 and the sun gear 106. The planet gears 108 are carried within a plurality of carrying spaces which are formed in the planetary carrier 110 at a given circumferential spacing, and each tooth crest is disposed in sliding contact with the internal surface of the carrying space (side surfaces 110ba of stanchions 110b) . It is to be noted that in this embodiment, the planetary carrier 110 is formed integrally with the first housing 102A. The internal gear 104, the sun gear 106, the planet gear 108 and the planetary carrier 110 constitute together the planetary gear type center differential unit 122.

The planetary carrier 110 rotates about the axis of rotation L1 of the internal gear 104 and the sun gear 106 and the planet gears 108 carried by the planetary carrier 110 are arranged such that the center axis L2 of the planet gear can rotate about the axis of rotation L1 of the planetary carrier 110 as the planetary carrier 110 rotates, and such that the planet gear 108 can rotate about its own axis L2 within the planet gear carrying space in the planetary carrier 110. In this embodiment, the internal gear 104, the sun gear 106 and the planet gears 108 have helical gear teeth, and each planet gear 108 is in meshing engagement with the internal gear 104 which is located on the outside and with the sun gear 106 which is located on the inside. The internal gear 104 is formed with a cylindrical portion 104e around the inner periphery thereof, the cylindrical portion 104e extending externally of the housing 102. A rear axle is connected to the cylindrical portion 104e.

A case 124 having a spherical internal surface is connected to the inner periphery of the sun gear 106 through splines 106a and 124a. The case 124 is formed with a pair of circular openings 124b which diametrically extend through the cylindrical wall, and a pinion pin 126 has its opposite ends inserted into the upper and the lower circular opening 124b.

Pinion gears 128 are fitted over the pinion pin 126 at locations toward the opposite ends thereof. The pair of pinion gears 128 are in meshing engagement with a pair of side gears 130 disposed on the lateral sides of the axis of rotation L1 of the internal gear 104 and the sun gear 106 of the planetary gear type differential unit 122. The pinion pin 126 inserted into the circular openings 124b in the case 124, the pair of pinion gears 128 fitted over the pinion pin 126 and the pair of side gears 130 which are disposed on the both lateral sides and meshing with the pinion gears 128 constitute together the bevel gear type front differential unit 120. The left and the right side gear 130 are connected to the front left and the right axle, respectively.

In the differential gearing formed by an integral construction including the front differential unit 120 and the center differential unit 122, when a drive from an engine is input to the housing 102, for example, the planetary carrier 110 which is integral with the housing 102 rotates, and such rotation is transmitted through the planet gears 108 carried thereby to rotate the internal gear 104 and the sun gear 106 about the axis of rotation L1. The cylindrical portion 104e which is formed toward the center of the internal gear 104 is connected to the rear axle, and the drive is transmitted through the internal gear 104 to rear wheels.

When the pinion pin 126 inserted through the case 124 rotates in response to the rotation of the sun gear 106, the pair of pinion gears 128 mounted on the pinion pin 126 rotate about the axis of rotation L1 of the internal gear 104 and the sun gear 106 (which is a center axis of the front left and right axles). When a vehicle is running straightforward on a flat road, the rotational resistances of left and right drive wheels are equal, and accordingly, the left and the right side gear 130 move with an equal number of revolutions as the pinion gears 128 rotate, whereby the entire assembly rotates as a single block. When cornering, the both pinion gears 128 rotate about the pinion pin 126, thereby correcting for a differential rotation of the left and the right wheel or the left and the right side gear 130.

Also in this embodiment, the tooth crest of the planet gear is formed with a number of fine recesses in an irregular conditions as illustrated in Figs. 3 and 4, achieving a similar function and effect as described above in connection with the first embodiment.

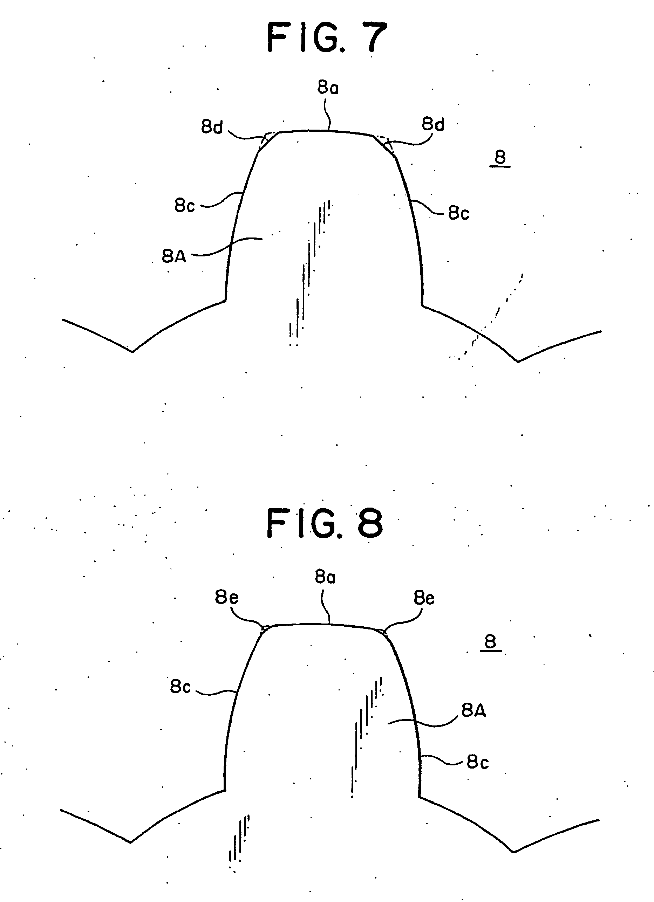

Figs. 7 to 9 illustrate a single gear tooth 8A, to an enlarged scale, of a planet gear 8 used in a differential gearing for vehicle including a planetary gear mechanism according to a third to a fifth embodiment, respectively. It should be understood that the general arrangement of the differential gearing remains the same as in the first or the second embodiment, and accordingly, related parts will be described by using the same designations as used in Figs. 1 and 2.

In Fig. 7, a chamfered portion 8d is provided between a tooth crest 8a and a side surface 8c of a tooth 8A of a planet gear 8. When the chamfered portion 8d is formed on the both sides of the top end (tooth crest 8a) of the tooth 8A, the introduction of a lubricant oil onto the tooth crest 8a which represents a sliding surface relative to a planetary carrier 10, is facilitated, thus improving the lubricating effect. As the introduction of the lubricant oil onto the tooth crest 8a is facilitated, the abrasion resistance of the tooth crest 8a of the planet gear as well as the planet gear carrying space of the planetary carrier 10 which opposes the tooth crest 8a (side surfaces 10ba of stanchions 10b) is improved, in turn improving the seizure resistance. In addition, noises and vibrations which may be developed during the sliding motion can be reduced.

In Fig. 8, a tooth crest edge 8e located between a tooth crest 8a and a side surface 8c of a tooth 8A of a planet gear 8 is formed with a radius of curvature. When the edge 8a of the tooth crest is formed with a radius of curvature, the introduction of a lubricant oil onto the sliding surface (the tooth crest 8a) is facilitated in the similar manner as when the chamfered portions 8d are provided, thus improving the lubricating effect, the abrasion resistance and the seizure resistance. Also, noises and vibrations which may be developed during the sliding motion can be reduced.

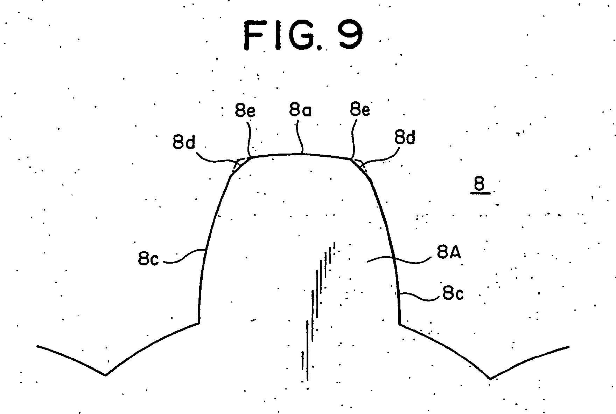

In Fig. 9, the arrangement shown in Figs. 7 and 8 are used in combination. Thus, a chamfered portion 8d is formed between a tooth crest 8a and a side surface 8c of a tooth 8A of a planet gear 8, and an edge 8e located between the chamfered portion 8d and the tooth crest 8a is formed with a radius of curvature. Again, a function and effect similar to that achieved by the arrangements shown in Figs. 7 and 8 can be achieved.

A machining operation which is required to achieve the arrangements shown in Figs. 7 to 9 for the planet gear 8 of the differential gearing for vehicle is not limited to any specific operation. The chamfering operation or the rounding operation to provide a radius of curvature may take place af ter the tooth configuration has been shaped, but may also be applied at the same time as the tooth cutting operation.

The arrangements shown in the first and the second embodiment are directed to introducing and keeping a lubricant oil on the tooth crest 8a of the planet gear 8, and the arrangements shown in Figs. 7 to 9 are also directed to facilitating the introduction of a lubricant oil onto the tooth crest 8a of the planet gear 8, and accordingly, these arrangements may be used in combination. Thus, the tooth crest 8a of the planet gear 8 may be formed with a number of fine recesses in an irregular condition (see Fig. 3), and at the same time, a chamfered portion 8d may be provided between the tooth crest 8a of the planet gear 8 and the side surface 8c of the tooth 8A or the edge 8e may be formed with a radius of curvature, or the chamfered portion 8a and the edge 8e located toward the tooth crest may be formed with a radius of curvature. When such a choice is made, the introduction of a lubricant oil onto the tooth crest 8a of the tooth 8A of the planet gear 8 is facilitated and the lubricant oil can be kept in place reliably, contributing to a further improvement of the effects described above.

## Claims

1. A planet gear (8) for the planetary gear mechanism of a vehicle differential gearing which comprises an internal gear (4), a sun gear (6) disposed on a circle located on the inside of and concentric with the internal gear (4), planet gears (8) disposed between and in meshing engagement with the internal gear (4) and the sun gear (6), and a carrier (10) disposed in sliding contact with a tooth crest of the planet gear (8) for allowing the planet gear (8) to rotate about an axis of rotation of the sun gear (6) and to rotate about a center axis of the planet gear (8);
**characterized in that**:
the tooth crest (8a) of the planet gear (8) is formed into a configuration having a number of recesses in an irregular condition, and
wherein the tooth crest has a finished surface, said finished surface is shallow as compared with the depth of recesses formed in the tooth crest.

2. A planet gear (108) for the planetary gear mechanism of a vehicle differential gearing which comprises an internal gear (104), a sun gear (106) disposed on a circle located on the inside of and concentric with the internal gear (104), planet gears (108) disposed between and in meshing engagement with the internal gear (104) and the sun gear (106), and a carrier (110) disposed in sliding contact with a tooth crest of the planet gear (108) for allowing the planet gear (108) to rotate about an axis of rotation of the sun gear (106) and to rotate about a center axis of the planet gear (108); **characterized in that**:
the tooth crest of the planet gear (108) is configured to have discontinuous recesses therein, and:
wherein the tooth crest has a finished surface, said finished surface is shallow as compared with the depth of recesses formed in the tooth crest.

3. A planet gear (108) according to claim 2, in which the tooth crest of the planet gear (108) is formed into a configuration having a number of recesses in an irregular condition.

4. A differential gearing for a vehicle, the differential gearing including a planetary gear mechanism which comprises an internal gear (4, 104), a sun gear disposed on a circle located on the inside of and concentric with the internal gear, at least one planet gear disposed between and in meshing engagement with the internal gear and the sun gear, and a carrier disposed in sliding contact with a tooth crest of the planet gear for allowing the planet gear to rotate about an axis of rotation of the sun gear and to rotate about a center axis of the planet gear, the at least one planet gear (8, 108) having the features of any of claims 1 to 3.

5. A method of manufacturing a tooth crest of a planet gear as defined in claim 1 or 2, including the step of:
applying a surface finish to the tooth crest (8a) of the planet gear and choosing the finished surface to be shallow as compared with the depth of recesses formed in the tooth crest.

6. A method of manufacturing a tooth crest of a planet gear as defined in claim 5, further including the step of:
coating the tooth crest (8a) of the planet gear (8, 108) .

## Patentansprüche

1. Planetenrad (8) für den Planetengetriebemechanismus eines Differenzialgetriebes eines Fahrzeugs, das ein Hohlrad (4), ein Sonnenrad (6), das auf einem Kreis innerhalb von und konzentrisch zu dem Hohlrad (4) angeordnet ist, Planetenräder (8), die in Zahneingriff mit dem Hohlrad (4) und dem Sonnenrad (6) zwischen diesen angeordnet sind, und einen Steg (10) umfasst, der in Gleitverbindung mit einer Zahnspitze des Planetenrads (8) angeordnet ist, um es dem Planetenrad (8) zu ermöglichen, sich um eine Rotationsachse des Sonnenrads (6) zu drehen und sich um eine Mittelachse des Planetenrads (8)zu drehen;
**dadurch gekennzeichnet, dass**:
die Zahnspitze (8a) des Planetenrads (8) zu einer Struktur ausgeformt ist, die eine Reihe von Vertiefungen mit einer unregelmäßigen Beschaffenheit hat, und
wobei die Zahnspitze eine bearbeitete Oberfläche hat, wobei die bearbeitete Oberfläche im Vergleich zu der Tiefe der Vertiefungen, die auf der Zahnspitze ausgeformt sind, flach ist.

2. Planetenrad (108) für den Planetengetriebemechanismus eines Differenzialgetriebes eines Fahrzeugs, das ein Hohlrad (104), ein Sonnenrad (106), das auf einem Kreis innerhalb von und konzentrisch zu dem Hohlrad (104) angeordnet ist, Planetenräder (108), die in Zahneingriff mit dem Hohlrad (104) und dem Sonnenrad (106) zwischen diesen angeordnet sind, und einen Steg (110) umfasst, der in Gleitverbindung mit einer Zahnspitze des Planetenrads (108) angeordnet ist, um es dem Planetenrad (108) zu ermöglichen, sich um eine Rotationsachse des Sonnenrads (106) zu drehen und sich um eine Mittelachse des Planetenrads (108)zu drehen;
**dadurch gekennzeichnet, dass**:
die Zahnspitze des Planetenrads (108) gestaltet ist, um darin unterbrochene Vertiefungen zu haben, und
wobei die Zahnspitze eine bearbeitete Oberfläche hat, wobei die bearbeitete Oberfläche im Vergleich zu der Tiefe der Vertiefungen, die auf der Zahnspitze ausgeformt sind, flach ist.

3. Planetenrad (108) nach Anspruch 2, bei dem die Zahnspitze des Planetenrads (108) zu einer Struktur ausgeformt ist, die eine Reihe von Vertiefungen mit einer unregelmäßigen Beschaffenheit hat.

4. Differenzialgetriebe für ein Fahrzeug, wobei das Differenzialgetriebe einen Planetengetriebemechanismus aufweist, das ein Hohlrad (4, 104), ein Sonnenrad, das auf einem Kreis innerhalb von und konzentrisch zu dem Hohlrad angeordnet ist, zumindest ein Planetenrad, das in Zahneingriff mit dem Hohlrad und dem Sonnenrad zwischen diesen angeordnet ist, und einen Steg umfasst, der in Gleitverbindung mit einer Zahnspitze des Planetenrads angeordnet ist, um es dem Planetenrad zu ermöglichen, sich um eine Rotationsachse des Sonnenrads zu drehen und sich um eine Mittelachse des Planetenrads zu drehen, wobei das zumindest eine Planetenrad (8, 108) die Merkmale irgendeines der Ansprüche 1 bis 3 aufweist.

5. Verfahren zur Herstellung einer Zahnspitze eines Planetenrads wie in Anspruch 1 oder 2 festgelegt, mit dem Schritt:
Anwenden einer Oberflächenbearbeitung auf die Zahnspitze (8a) des Planetenrads, wobei die bearbeitete Oberfläche im Vergleich zu der Tiefe der Vertiefungen, die auf der Zahnspitze ausgeformt sind, flach gewählt wird.

6. Verfahren zur Herstellung einer Zahnspitze eines Planetenrads wie ein Anspruch 5 festgelegt, weiter mit dem Schritt:
Beschichtung der Zahnspitze (8a) des Planetenrads (8, 108).

## Revendications

1. Engrenage planétaire (8) pour le mécanisme d'engrenage planétaire d'un engrenage différentiel de véhicule qui comprend un engrenage interne (4), un engrenage solaire (6) disposé sur un cercle situé à l'intérieur de et concentrique avec l'engrenage interne (4), des engrenages planétaires (8) disposés entre l'engrenage interne (4) et l'engrenage solaire (6) et engrenés avec eux, et un dispositif porteur (10) disposé en contact coulissant avec un sommet de dent de l'engrenage planétaire (8) pour permettre à l'engrenage planétaire (8) de tourner autour d'un axe de rotation de l'engrenage solaire (6) et de tourner autour d'un axe central de l'engrenage planétaire (8) ;
**caractérisé en ce que** :
le sommet de dent (8a) de l'engrenage planétaire (8) est formé en une configuration ayant un nombre de cavités de condition irrégulière, et
dans lequel le sommet de dent a une surface finie, ladite surface finie est peu profonde comparée avec la profondeur de cavités formées dans le sommet de dent.

2. Engrenage planétaire (108) pour le mécanisme d'engrenage planétaire d'un engrenage différentiel de véhicule qui comprend un engrenage interne (104), un engrenage solaire (106) disposé sur un cercle situé à l'intérieur de et concentrique avec l'engrenage interne (104), des engrenages planétaires (108) disposés entre l'engrenage interne (104) et l'engrenage solaire (106) et engrenés avec eux, et un dispositif porteur (110) disposé en contact coulissant avec un sommet de dent de l'engrenage planétaire (108) pour permettre à l'engrenage planétaire (108) de tourner autour d'un axe de rotation de l'engrenage solaire (106) et de tourner autour d'un axe central de l'engrenage planétaire (108) ;
**caractérisé en ce que** :
le sommet de dent de l'engrenage planétaire (108) est configuré afin de contenir des cavités discontinues, et :
dans lequel le sommet de dent a une surface finie, ladite surface finie est peu profonde comparée avec la profondeur des cavités formées dans le sommet de dent.

3. Engrenage planétaire (108) selon la revendication 2, dans lequel le sommet de dent de l'engrenage planétaire (108) est formé en une configuration ayant un nombre de cavités de condition irrégulière.

4. Engrenage différentiel pour un véhicule, l'engrenage différentiel incluant un mécanisme d'engrenage planétaire qui comprend un engrenage interne (4, 104), un engrenage solaire disposé sur un cercle situé à l'intérieur de et concentrique avec l'engrenage interne, au moins un engrenage planétaire disposé entre l'engrenage interne et l'engrenage planétaire et engrené avec eux, et un dispositif porteur disposé en contact coulissant avec un sommet de dent de l'engrenage planétaire pour permettre à l'engrenage planétaire de tourner autour d'un axe de rotation de l'engrenage solaire et de tourner autour d'un axe central de l'engrenage planétaire, le au moins un engrenage planétaire (8, 108) ayant les caractéristiques de l'une quelconque des revendications 1 à 3.

5. Procédé pour fabriquer un sommet de dent d'un engrenage planétaire tel que défini dans la revendication 1 ou 2, comprenant l'étape consistant à :
appliquer une finition de surface au sommet de dent (8a) de l'engrenage planétaire et choisir que la surface finie soit peu profonde comparée à la profondeur de cavités formées dans le sommet de dent.

6. Procédé pour fabriquer un sommet de dent d'un engrenage planétaire tel que défini dans la revendication 5, incluant en outre l'étape consistant à :
recouvrir le sommet de dent (8a) de l'engrenage planétaire (8, 108).
